# EUROPÄISCHE PATENTSCHRIFT

(11) **EP 3 176 023 B1**
(45) Veröffentlichungstag und Bekanntmachung des Hinweises auf die Patenterteilung: **25.03.2020**
(21) Anmeldenummer: 16201670.3
(22) Anmeldetag: 01.12.2016
(51) Int. Cl.: B60L 53/12, B60L 53/14, B60L 53/16, B60L 53/30, B60L 53/37, B60L 53/38, B60L 53/60, B60L 55/00

(54) **ENERGIEZUFÜHREINRICHTUNG, ENERGIEZUFÜHRSYSTEM UND VERFAHREN ZUR ZUFÜHRUNG VON ENERGIE IN EIN KRAFTFAHRZEUG**
ENERGY SUPPLY DEVICE, ENERGY SUPPLY SYSTEM AND METHOD FOR SUPPLYING ENERGY TO A MOTOR VEHICLE
DISPOSITIF D'ALIMENTATION EN ÉNERGIE, SYSTÈME D'ALIMENTATION EN ÉNERGIE ET PROCÉDÉ D'ALIMENTATION EN ÉNERGIE D'UN VÉHICULE AUTOMOBILE

(30) Priorität: 04.12.2015 DE 102015015698
(43) Veröffentlichungstag der Anmeldung: 07.06.2017
(73) Patentinhaber: AUDI AG, 85045 Ingolstadt (DE)
(72) Erfinder: Kupfer, Alexander, 68259 Mannheim (DE); Weigelt, Sandro, 85101 Lenting (DE); Ott, Christoph, 85084 Reichertshofen-Langenbruck (DE); Kaese, Volker, 85053 Ingolstadt (DE)

(56) Entgegenhaltungen:
- EP-A1- 2 684 733
- WO-A2-2011/127455
- DE-T2- 69 711 963
- JP-A- 2013 198 187
- US-A1- 2003 162 448
- US-A1- 2011 066 515

## Beschreibung

Die Erfindung betrifft eine Energiezuführeinrichtung, ein Energiezuführsystem und ein Verfahren zur Zuführung von Energie in ein Kraftfahrzeug.

Eine solche Energiezuführeinrichtung weist eine Koppeleinrichtung auf, die eingerichtet ist zum Herstellen einer Wirkverbindung zwischen der Energiezuführeinrichtung und einem Kraftfahrzeug, um dem Kraftfahrzeug Energie zuzuführen (EP 2 684 733 A1; WO 2011/127455 A2; DE 697 11 963 T2; US 2011/066515 A1; JP 2013 198187 A; US 2003/162448 A1). Dabei kann die Koppeleinrichtung beispielsweise seitlich, frontal oder in einem Heckbereich an das Kraftfahrzeug heran verlagerbar sein, oder im Wesentlichen örtlich fixiert oder an Schienen geführt unter dem Kraftfahrzeug angeordnet werden.

Der Erfindung liegt die Aufgabe zugrunde, eine verbesserte Energiezuführeinrichtung, ein verbessertes Energiezuführsystem und ein verbessertes Verfahren zur Zuführung von Energie in ein Kraftfahrzeug zu schaffen.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Energiezuführeinrichtung zur Zuführung von Energie in ein Kraftfahrzeug geschaffen wird, wobei die Energiezuführeinrichtung eine Koppeleinrichtung aufweist, die eingerichtet ist zum Herstellen einer Wirkverbindung zwischen der Energiezuführeinrichtung und einem Kraftfahrzeug, um dem Kraftfahrzeug Energie zuzuführen. Dabei ist vorgesehen, dass die Koppeleinrichtung frei unter einem Kraftfahrzeug verlagerbar ausgebildet ist. Die Koppeleinrichtung ist selbst als Aufwickeleinrichtung ausgebildet und eingerichtet, um während ihrer Verlagerung eine einer Verlagerungsbahn überlagerte Rotationsbewegung durchzuführen, und dabei eine Energieleitung abhängig von ihrer Verlagerungsrichtung auf- oder abzuwickeln, wobei die Koppeleinrichtung an ihrer Unterseite drei Räder aufweist, die auf einer gemeinsamen Kreislinie und bezüglich ihrer Abrollrichtung in Umfangsrichtung gesehen orientiert angeordnet sind. Die Energiezuführeinrichtung weist Vorteile gegenüber dem Stand der Technik auf. Insbesondere ergibt sich eine hohe Flexibilität bezüglich der Kopplung der Koppeleinrichtung mit dem Kraftfahrzeug, da diese - ohne Fixierung und insbesondere ohne Führung durch Schienen - frei unter dem Kraftfahrzeug verlagerbar ist, wobei eine kraftfahrzeugseitige Schnittstelle frei an einer Unterseite des Kraftfahrzeugs positioniert werden kann. Zugleich ergibt sich eine geschützte Anordnung der Koppeleinrichtung unter dem Kraftfahrzeug. Zugleich bleibt hierdurch Raum in einem Umgebungsbereich neben, vor und hinter dem Kraftfahrzeug frei, der anderweitig genutzt werden kann.

Unter einer Energiezuführeinrichtung wird insbesondere eine Einrichtung verstanden, die eingerichtet ist, um einem Kraftfahrzeug Energie aus einer vorzugsweise externen Quelle, die vorzugsweise selbst nicht Teil der Energiezuführeinrichtung ist, zuzuführen. Die Energiezuführeinrichtung ist also insbesondere eingerichtet zum Durchleiten von Energie von der externen Quelle zu dem Kraftfahrzeug. Dabei kann es sich um chemische Energie, insbesondere in Form eines Brennstoffs, beispielsweise eines flüssigen Brennstoffs oder eines Brenngases, aus einem Tank oder einem Leitungssystem handeln. In diesem Fall weist die Energiezuführeinrichtung bevorzugt eine Pumpe oder allgemein ein Fördersystem für den Brennstoff auf. Alternativ oder zusätzlich kann es sich auch um elektrische Energie handeln, wobei die Energiezuführeinrichtung bevorzugt eingerichtet ist, um dem Kraftfahrzeug elektrische Energie insbesondere in Form eines Ladestroms aus einer Stromquelle, beispielsweise direkt aus einem Stromnetz oder einem Stromspeicher, beispielsweise einem Akkumulator, zuzuführen. Die Energiezuführeinrichtung weist in diesem Fall insbesondere wenigstens eine Stromleitung und wenigstens ein elektrisches Verbindungsmittel, insbesondere einen Stecker oder eine Induktionsspule, als Koppelmodul der Koppeleinrichtung zur Verbindung mit dem Kraftfahrzeug auf.

Unter einem Kraftfahrzeug wird insbesondere ein selbstfahrendes Fahrzeug verstanden, welches eine Antriebsmaschine, insbesondere einen Motor, aufweist, der eine extern zugeführte Energieform in Bewegungsenergie des Kraftfahrzeugs wandeln kann. Der Motor kann insbesondere als Brennkraftmaschine und/oder als elektrische Maschine ausgebildet sein. Besonders bevorzugt ist die Energiezuführeinrichtung eingerichtet, um einem als Personenkraftwagen (PKW) ausgebildeten Kraftfahrzeug Energie zuzuführen, insbesondere elektrische Energie.

Unter eine Koppeleinrichtung wird insbesondere eine Einrichtung verstanden, die eingerichtet ist, um die Energiezuführeinrichtung derart mit dem Kraftfahrzeug zu verbinden, dass Energie von der Energiezuführeinrichtung - die letztlich bevorzugt aus der externen Quelle stammt - in das Kraftfahrzeug geleitet werden kann. Handelt es sich bei der Energie um chemische Energie, kann die Koppeleinrichtung beispielsweise als Zapfpistole oder Zapfstutzen ausgebildet sein, der gegebenenfalls einen geeigneten Verschluss- und/oder Verbindungsmechanismus zur Kopplung mit dem Kraftfahrzeug aufweist. Handelt es sich bei der Energie um elektrische Energie, weist die Koppeleinrichtung vorzugsweise ein als elektrisches Verbindungsmittel ausgebildetes Koppelmodul auf.

Dementsprechend wird unter einer Wirkverbindung zwischen der Energiezuführeinrichtung und dem Kraftfahrzeug insbesondere eine Verbindung verstanden, die es gestattet, über diese Verbindung Energie von der Energiezuführeinrichtung in das Kraftfahrzeug zu überführen.

Dass die Koppeleinrichtung frei verlagerbar ist, bedeutet insbesondere, dass die Koppeleinrichtung ohne mechanische Führung, insbesondere ohne mechanische Begrenzung ihres Verlagerungspfads, verlagerbar ist. Vorzugsweise ist die Koppeleinrichtung frei in einer Ebene, insbesondere einer X,Y-Ebene, insbesondere entlang einer Bodenfläche, auf welcher das Kraftfahrzeug aufsteht, verlagerbar. Die Koppeleinrichtung ist vorzugsweise auf einem Parkplatz für das Kraftfahrzeug frei verlagerbar. Insbesondere ist die Koppeleinrichtung bevorzugt unter einem geparkten Kraftfahrzeug frei verlagerbar. Durch die freie Verlagerbarkeit der Koppeleinrichtung können mit derselben beliebige Punkte unter dem Kraftfahrzeug angefahren werden, sodass eine große Freiheit in Hinblick auf die Positionierung eines kraftfahrzeugseitigen Koppelmoduls besteht.

Dass die Koppeleinrichtung unter dem Kraftfahrzeug verlagerbar ist, bedeutet insbesondere, dass die Koppeleinrichtung so ausgebildet ist, dass sie unter einem Unterboden des Kraftfahrzeugs verlagerbar ist. Dies bedeutet insbesondere, dass die Koppeleinrichtung höchstens so hoch ausgebildet ist, dass sie frei und ohne anzustoßen unter dem Unterboden des Kraftfahrzeugs verlagert werden kann.

Gemäß einer Weiterbildung der Erfindung ist vorgesehen, dass die Koppeleinrichtung selbstfahrend ausgebildet ist. Dies stellt eine ebenso einfache wie flexible Ausgestaltung der Koppeleinrichtung und damit auch der Energiezuführeinrichtung dar. Dabei bedeutet der Begriff "selbstfahrend" insbesondere, dass die Koppeleinrichtung einen ihr zugeordneten Antrieb und vorzugsweise eine ihr zugeordnete Lenkung aufweist. Somit ist die Koppeleinrichtung eingerichtet, um gleichsam aus eigener Kraft ohne Beschränkung ihres Verlagerungspfads unter einem Kraftfahrzeug beweglich zu sein.

Gemäß einer nicht zur Erfindung gehörenden Ausgestaltung weist die Koppeleinrichtung zumindest eine drehbare Aufwickeleinrichtung für eine Energieleitung auf. Die Aufwickeleinrichtung kann zugleich als Abwickeleinrichtung dienen. Während einer Verlagerung der Koppeleinrichtung ist die Energieleitung flexibel und abhängig von der Verlagerung auf- und abwickelbar. Zur Zuführung von chemischer Energie kann die Energieleitung als Schlauch ausgebildet sein. Zur Zuführung von elektrischer Energie ist die Energieleitung bevorzugt als Stromkabel ausgebildet. Es ist möglich, dass die Aufwickeleinrichtung als Kabeltrommel, insbesondere zum Auf- und Abwickeln eines Stromkabels ausgebildet ist. Dies stellt eine ebenso einfache wie zweckmäßige Ausgestaltung der Aufwickeleinrichtung dar.

Vorzugsweise weist die Koppeleinrichtung eine Reinigungseinrichtung - insbesondere an einem der Kabeltrommel zugeordneten Kabeleingang - auf, welche eingerichtet ist, um die Energieleitung beim Auf- und/oder Abwickeln zu reinigen. Auf diese Weise kann verhindert werden, dass an der Energieleitung angeordneter Schmutz in die Aufwickeleinrichtung transportiert wird. Die Reinigungseinrichtung kann beispielsweise Borsten aufweisen, an welchen die Energieleitung beim Auf- und/und Abwickeln vorbeigeführt wird, sodass Schmutz durch die Borsten abgestreift werden kann. Die Aufwickeleinrichtung kann insbesondere als zentrale Rotationseinheit der Koppeleinrichtung ausgebildet sein.

Erfindungsgemäß ist vorgesehen, dass die Koppeleinrichtung selbst als Aufwickeleinrichtung ausgebildet ist. Die Koppeleinrichtung ist ausgebildet, um während ihrer Verlagerung eine einer Verlagerungsbahn überlagerte Rotationsbewegung durchzuführen, und dabei eine Energieleitung abhängig von ihrer Verlagerungsrichtung auf-oder abzuwickeln. Insbesondere kann die Koppeleinrichtung selbst als Kabeltrommel ausgebildet sein. Die Energieleitung wird dabei durch drehende Bewegung der Kabeltrommel während des Fortbewegens auf- oder abgewickelt. Dabei ist es möglich, dass die Aufwickeleinrichtung - insbesondere radial abstehende - Rechen aufweist, welche dazu dienen, die Energieleitung währen der Verlagerung aufzunehmen.

Erfindungsgemäß weist die Koppeleinrichtung drei, vorzugsweise genau drei, Räder auf, die auf einer gemeinsamen Kreislinie - vorzugsweise in gleichen Winkelabständen voneinander - und bezüglich ihrer Abrollrichtung in Umfangsrichtung gesehen orientiert insbesondere konzentrisch zu einem Schwerpunkt oder Mittelpunkt der Koppeleinrichtung angeordnet sind. Vorzugsweise ist jedem einzelnen Rad eine separate und insbesondere separat ansteuerbare Steuerung zugeordnet. Insbesondere sind die Räder bevorzugt auf einer Kreisbahn mit Mittelpunkt im Mittelpunkt der Koppeleinrichtung angeordnet. Bei dieser Ausgestaltung kann mit einfacher Mechanik eine Bewegung in alle Richtungen ermöglicht werden, sodass die Koppeleinrichtung sich beliebig fortbewegen und beliebig rotieren kann.

Gemäß einer Weiterbildung der Erfindung ist vorgesehen, dass die Koppeleinrichtung als Robotereinheit ausgebildet ist. Hierdurch ergibt sich eine besonders hohe Flexibilität und Selbstständigkeit der Energiezuführeinrichtung sowie zugleich eine intelligente Steuerung der Verlagerung der Koppeleinrichtung, wobei diese insbesondere selbsttätig zu einer Schnittstelle eines Kraftfahrzeugs fahren und dort andocken kann, ohne dass es eines Eingriffs eines Nutzers bedarf.

Dabei zeigt sich insbesondere in Zusammenhang mit Elektrofahrzeugen, dass diese typischerweise über ein Ladekabel geladen werden. Der Fahrer muss dabei herkömmlicherweise das Ladekabel in eine Ladebuchse am Fahrzeug einführen. Dabei sind Ladestationen am Straßenrad, im Parkhaus, für die Montage in einer Garage, oder mobile Stationen zur Anbindung an eine übliche 220 Volt-Steckdose üblich. Das Einführen und Herausnehmen des Ladekabels muss dabei manuell erfolgen. Dabei sollte ein Elektrofahrzeug üblicherweise nach dem Abstellen zuhause oder am Arbeitsplatz an die Station angeschlossen werden. Dies stellt einen vergleichsweise hohen Mangel an Komfort dar im Vergleich zu einem Kraftfahrzeug, welches mittels eines chemischen Brennstoffs betrieben wird.

Erfindungsgemäß kann nun der Fahrer das Kraftfahrzeug auf einem Parkplatz abstellen, wobei die als Robotereinheit ausgebildete Koppeleinrichtung automatisch eine Verbindung zwischen der Energieleitung und dem Kraftfahrzeug herstellt. Zusätzlich ist die Robotereinheit bevorzugt eingerichtet, um die Verbindung beim Einsteigen des Fahrers in das Kraftfahrzeug oder beim Starten des Kraftfahrzeugs, oder zu einem anderen geeigneten Zeitpunkt zu trennen. Der Fahrer hat dadurch den Komfort, sein Fahrzeug einfach abstellen zu können, sodass dieses automatisch mit Energie geladen wird. Eine Konstruktion der Energiezuführeinrichtung mit einem bodenfahrenden Roboter unter Einsatz von Standardsteckern ermöglicht eine relativ kostengünstige Umsetzung.

Gemäß einer Weiterbildung der Erfindung ist vorgesehen, dass die Koppeleinrichtung ein Koppelmodul aufweist. Unter einem Koppelmodul wird insbesondere eine Einrichtung verstanden, die ausgebildet ist, um mit einem kraftfahrzeugseitigen, komplementären Koppelmodul verbunden zu werden und zusammenzuwirken, um Energie von der Energiezuführeinrichtung zu dem Kraftfahrzeug zu übertragen. Das Koppelmodul kann beispielsweise im Fall von chemischer Energie als Zapfpistole oder als Schlauch- oder Rohrverbinder, oder in anderer geeigneter Weise zur Übergabe eines fluiden Mediumstroms eingerichtet sein; im Fall elektrischer Energie ist das Koppelmodul bevorzugt als elektrisches Verbindungsmittel, beispielsweise als Stecker ausgebildet. Es ist möglich, dass das Koppelmodul wenigstens eine Induktionsspule zur induktiven Übertragung von elektrischer Energie aufweist. Ein als Stecker und insbesondere als Steckerkopf ausgebildetes Koppelmodul ist bevorzugt ausgebildet nach einer zugelassenen Steckernorm gemäß IEC 62196 in der an dem den Zeitrang der vorliegenden Anmeldung bestimmenden Tag gültigen Fassung.

Gegenüber einer induktiven Lademöglichkeit hat eine elektrische Steckverbindung den Vorteil, dass ein Wirkungsgrad der Übertragung der elektrischen Energie 100 % betragen kann. Außerdem fallen keine elektromagnetischen Emissionen an, und es kann insbesondere mit einer Standardsteckverbindung eine hohe definierte Leistung übertragen werden.

Gegenüber einer elektrischen Steckverbindung hat eine induktive Wirkverbindung den Vorteil, dass keine mechanische Verbindung bewirkt werden muss, sodass die Toleranzen in Hinblick auf eine relative Positionierung der beteiligten Koppelmodule größer sind. Allerdings ist auch hier eine möglichst genaue Positionierung vorteilhaft, um einen möglichst großen Wirkungsgrad für die Übertragung elektrischer Energie zu verwirklichen.

Das Koppelmodul ist vorzugsweise quer, insbesondere senkrecht zu einer Verlagerungsebene der Koppeleinrichtung, in welcher diese frei unter einem Kraftfahrzeug verlagerbar ist, in einer Ausfahrrichtung verlagerbar. Insbesondere ist das Koppelmodul bevorzugt in vertikaler Richtung oder in Z-Richtung verlagerbar. Hierdurch ist es möglich, die Koppeleinrichtung zunächst durch Verfahren in der Verlagerungsebene unter einem Koppelmodul eines Kraftfahrzeugs zu positionieren und dann das Koppelmodul der Koppeleinrichtung quer zu der Verlagerungsebene auszufahren und mit dem kraftfahrzeugseitigen Koppelmodul zu verbinden. Zum Lösen der Verbindung kann das Koppelmodul wieder quer zur Verlagerungsebene zurückverlagert, insbesondere in vertikaler Richtung eingefahren werden, wobei dann die Koppeleinrichtung wieder frei in ihrer Verlagerungsebene verlagerbar ist, insbesondere ohne dass das Koppelmodul als Störgeometrie quer zur Verlagerungsebene vorsteht. Bevorzugt weist die Koppeleinrichtung einen vertikal beweglichen Steckerkopf als Koppelmodul auf, der in eine Steckerbuchse am Kraftfahrzeug eingeführt werden kann.

Gemäß einer bevorzugten Ausgestaltung ist vorgesehen, dass das Koppelmodul um 360° um die vertikale Achse oder Z-Achse drehbar ausgebildet ist. Es kann dabei insbesondere relativ zu der restlichen Koppeleinrichtung an dieser drehbar montiert sein. Es ist auch möglich, dass das Koppelmodul gemeinsam mit der restlichen Koppeleinrichtung um 360° drehbar ist.

Vorzugsweise ist das Koppelmodul fest - insbesondere zentrisch - in der Aufwickeleinrichtung montiert, insbesondere derart, dass die Aufwickeleinrichtung relativ zu dem Koppelmodul drehbar ist. Dies hat den Vorteil, dass das Koppelmodul nicht gemeinsam mit der Energieleitung gedreht werden muss. Besonders bevorzugt sind die Aufwickeleinrichtung einerseits und das Koppelmodul andererseits unabhängig voneinander um eine Drehachse quer, insbesondere senkrecht zur Verlagerungsebene der Koppeleinrichtung unter einem Kraftfahrzeug frei drehbar, insbesondere also um eine Z-Achse.

Weist das Koppelmodul wenigstens eine Induktionsspule und einen elektrischen Steckerkopf auf, kann der Steckerkopf bevorzugt in einem Zentrum der Induktionsspule angebracht werden. Dies hat den Vorteil, dass die Induktionsspule zum Bewirken einer elektrischen Steckverbindung zur Positionierung der Koppeleinrichtung und insbesondere des Koppelmoduls verwendet werden kann.

Vorzugsweise ist das Koppelmodul quer zu seiner Ausfahrrichtung, also insbesondere in vertikaler oder Z-Richtung, elastisch montiert, sodass es insbesondere mit Bezug zu der Ausfahrrichtung einen Winkel von mindestens 5% bis höchstens 10% einnehmen kann. Dies hat den Vorteil, dass eine nicht exakt parallele und von einer genauen Positionierung abweichende Position der Koppeleinrichtung relativ zu dem Kraftfahrzeug, insbesondere des koppeleinrichtungsseitigen Koppelmoduls relativ zu dem kraftfahrzeugseitigen Koppelmodul, durch elastische Verlagerung des koppeleinrichtungsseitigen Koppelmoduls ausgeglichen werden kann.

Gemäß einer Weiterbildung der Erfindung ist vorgesehen, dass die Koppeleinrichtung eine maximale Höhe, gemessen über einer Bodenfläche, auf welcher die Koppeleinrichtung aufsteht, aufweist, welche höchstens 25 cm, vorzugsweise höchstens 22 cm, vorzugsweise höchstens 20 cm, vorzugsweise höchstens 15 cm, vorzugsweise höchstens 11 cm, beträgt. Die maximale Höhe beträgt bevorzugt mindestens 2 cm, vorzugsweise mindestens 3 cm, vorzugsweise mindestens 4 cm, vorzugsweise mindestens 5 cm, vorzugsweise mindestens 6 cm, vorzugsweise mindestens 7 cm, vorzugsweise mindestens 8 cm, vorzugsweise mindestens 9 cm, vorzugsweise mindestens 10 cm. Besonders bevorzugt beträgt die maximale Höhe 8 cm. Die maximale Höhe wird dabei insbesondere bei eingefahrenem Koppelmodul gemessen. Durch die hier angegebenen Höhen ist die Koppeleinrichtung geeignet, unter herkömmlichen Kraftfahrzeugen, insbesondere Personenkraftwagen, frei verlagert werden zu können.

Gemäß einer Weiterbildung der Erfindung ist vorgesehen, dass die Energiezuführeinrichtung eine bevorzugt stationäre Andockstation zum Andocken der Koppeleinrichtung aufweist. Insbesondere sind die Koppeleinrichtung einerseits und die Andockstation andererseits so aufeinander abgestimmt, dass die Koppeleinrichtung an der Andockstation andocken kann. Dabei ist unter "Andocken" insbesondere zu verstehen, dass die Koppeleinrichtung an oder in der Andockstation gehalten wird, und/oder dass zwischen der Andockstation und der Koppeleinrichtung eine Wirkverbindung hergestellt wird, über welche Energie und/oder Informationen zwischen der Andockstation und der Koppeleinrichtung austauschbar sind. Insbesondere ist es möglich, dass ein Antrieb für die selbstfahrende Koppeleinrichtung als elektrischer Antrieb ausgeschaltet ist, der aus einem Akkumulator gespeist wird, wobei der Akkumulator in der Andockstation über die Wirkverbindung geladen werden kann. Die Koppeleinrichtung kann sich zum Verbinden mit einem Kraftfahrzeug von der Andockstation lösen und von dieser wegverlagern. Nach Beenden der Verbindung mit dem Kraftfahrzeug kehrt die Koppeleinrichtung vorzugsweise zu der Andockstation zurück und dockt wieder an diese an. Dies hat den zusätzlichen Vorteil, dass die Koppeleinrichtung an einem definierten Ort aufbewahrt wird.

Ist die Energiezuführeinrichtung nicht in einem Schutzraum, beispielsweise einer Garage, sondern vielmehr im Freien angeordnet, weist die Energiezuführeinrichtung bevorzugt einen Wetterschutz zum Schutz der Andockstation und auch der mit der Andockstation verbundenen Koppeleinrichtung auf. Vorzugsweise ist der Wetterschutz als Überdachung ausgebildet.

Die Andockstation weist vorzugsweise eine Reinigungsvorrichtung auf, die eingerichtet ist, um die Koppeleinrichtung - insbesondere beim Andocken an die Andockstation - von Verschmutzungen, beispielsweise Schmutz oder Schnee, zu befreien.

Die Koppeleinrichtung ist vorzugsweise vermittelt über die Andockstation mit einer externen Energiequelle zur Zuführung von Energie aus der externen Energiequelle zu dem Kraftfahrzeug wirkverbunden. Beispielsweise ist es möglich, dass die Andockstation mit einem Brennstofftank, einer Brennstoffleitung, insbesondere einem Brennstoffleitungsnetz, oder einer Stromversorgung, insbesondere einer lokal verfügbaren Stromversorgung, verbunden ist. Die Energieleitung der Koppeleinrichtung ist vorzugsweise an einem ersten Ende mit der Andockstation und an einem zweiten Ende mit dem Koppelmodul verbunden.

Besonders bevorzugt ist die Andockstation mit einem 230 Volt- oder 380 Volt-Haushaltsanschluss zur Stromversorgung verbunden.

Bei einem bevorzugten Ausführungsbeispiel ist vorgesehen, dass die Andockstation fest, insbesondere an einem Boden, montiert und somit selbst nicht verlagerbar ist.

Gemäß einer Weiterbildung der Erfindung ist vorgesehen, dass die Koppeleinrichtung eine Positioniereinrichtung zur Positionierung der Koppeleinrichtung unter einem Koppelmodul eines Kraftfahrzeugs aufweist. Die Positioniereinrichtung ist eingerichtet, um eine möglichst genaue Positionierung der Koppeleinrichtung relativ zu dem kraftfahrzeugseitigen Koppelmodul zu bewirken. Die Positioniereinrichtung weist bevorzugt wenigstens einen Umgebungssensor und eine Steuerungseinrichtung auf, die mit dem wenigstens einen Umgebungssensor wirkverbunden ist, um einerseits eine Lage des kraftfahrzeugseitigen Koppelmoduls sowie andererseits eine momentane Lage der Koppeleinrichtung zu erkennen, und eine Verlagerung der Koppeleinrichtung hin zu dem kraftfahrzeugseitigen Koppelmodul zu bewirken. Vorzugsweise ist die Steuerungseinrichtung weiterhin eingerichtet, um eine Winkelposition zum Koppeln des koppeleinrichtungsseitigen Koppelmoduls mit dem kraftfahrzeugseitigen Koppelmodul zu erkennen und gegebenenfalls zu korrigieren, sodass das koppeleinrichtungsseitige Koppelmodul mit dem kraftfahrzeugseitigen Koppelmodul gekoppelt werden kann.

Der Umgebungssensor und die Steuerungseinrichtung sind vorzugsweise auch ausgebildet, um einen Fahrweg der Koppeleinrichtung zu erkennen und insbesondere Hindernissen ausweichen zu können. Weiterhin sind der Umgebungssensor und die Steuerungseinrichtung bevorzugt eingerichtet, um Fehlerzustände zu erkennen.

Der wenigstens eine Umgebungssensor ist bevorzugt als optischer Sensor ausgebildet. Die Steuerungseinrichtung weist in diesem Fall bevorzugt eine Bilderkennung auf.

Insbesondere dann, wenn die Koppeleinrichtung wenigstens eine Induktionsspule aufweist, kann diese zusätzlich oder alternativ als elektromagnetischer Umgebungssensor zur Positionierung der Koppeleinrichtung verwendet werden. Insbesondere ist es möglich, dass miteinander zusammenwirkende Induktionsspulen in der Koppeleinrichtung einerseits und in dem Kraftfahrzeug andererseits genutzt werden, um die Koppeleinrichtung relativ zu dem Kraftfahrzeug zu positionieren. Dabei können insbesondere die beteiligten Induktionsspulen so nahe wie möglich übereinander und zusätzlich so nahe wie möglich in vertikaler Richtung zueinander positioniert werden, insbesondere durch Ausfahren des Koppelmoduls in Ausfahrrichtung. Hierzu ist bevorzugt eine spezielle Steuerung in der Steuerungseinrichtung vorgesehen. Vorteilhaft hieran ist insbesondere, dass eine optimale Position unter Minimierung von Wirkungsgradverlusten für eine induktive Wirkverbindung erreicht werden kann.

Vorzugsweise weist die Energiezuführeinrichtung eine Diebstahlschutzvorrichtung auf, die insbesondere eingerichtet ist, um die Koppeleinrichtung vor unbefugtem Entfernen zu schützen. Dabei wird vorzugsweise bei einem Versuch des unbefugten Entfernens ein lautes akustisches Signal ausgesendet. Die Koppeleinrichtung geht in diesem Fall vorzugsweise in einen Sperrmodus, der eine weitere Verwendung unmöglich macht. Ein Entsperren der Koppeleinrichtung ist vorzugsweise insbesondere durch Eingabe einer Kennzahl, insbesondere einer PIN, möglich, besonders bevorzugt über ein mit der Koppeleinrichtung wirkverbundenes Mobiltelefon, insbesondere Smartphone.

Gemäß einer Weiterbildung der Erfindung ist vorgesehen, dass die Koppeleinrichtung eine verlagerbare Abdeckeinrichtung, insbesondere zur Abdeckung und Freigabe des Koppelmoduls, aufweist. Dabei ist die Abdeckeinrichtung insbesondere in eine Offenstellung und in eine Geschlossenstellung verlagerbar. In der Geschlossenstellung dient die Abdeckeinrichtung insbesondere zum Schutz des Koppelmoduls vor Schmutz, Feuchtigkeit, Nässe, Schnee, und/oder anderen Umwelteinflüssen, wobei sie in der Offenstellung insbesondere eine Freigabe des Koppelmoduls und dessen Verbindung mit einem kraftfahrzeugseitigen Koppelmodul ermöglicht. Vorzugsweise weist die Abdeckeinrichtung eine Dichteinrichtung auf, die verhindert, dass Schmutz oder Wasser in der Geschlossenstellung in die Koppeleinrichtung eindringt. Vorzugsweise wird die Abdeckeinrichtung erst kurz vor dem Koppeln in die Offenstellung verlagert. Nach dem Lösen der Kopplung mit dem Kraftfahrzeug wird die Abdeckeinrichtung wieder in ihre Geschlossenstellung verlagert. Vorzugsweise ist die Abdeckeinrichtung in einer Ebene offenbar, die parallel zu der Verlagerungsebene der Koppeleinrichtung orientiert ist. Dies hat den Vorteil, dass die Koppeleinrichtung den flachen Bauraum unter dem Kraftfahrzeug maximal ausnutzen kann. Es ist möglich, dass die Abdeckeinrichtung zum Öffnen oder Schließen verschwenkt, verkippt, verschoben, oder in anderer geeigneter Weise verlagert werden kann. Weiterhin ist es möglich, dass die Abdeckeinrichtung eine Mehrzahl von Schließelementen aufweist, beispielsweise zwei Schließelemente, die zum Öffnen und/oder Schließen relativ zueinander verlagert werden können.

Die Koppeleinrichtung weist vorzugsweise eine Verschmutzungserkennungseinrichtung auf, die eingerichtet ist, um eine Verschmutzung des Koppelmoduls zu erkennen und vorzugsweise gegebenenfalls - wenn dies nötig ist - einen Koppelvorgang zu unterbinden und einen Nutzer zum Reinigen des Koppelmoduls aufzufordern. Die Verschmutzungserkennungseinrichtung ist vorzugsweise als optische Erkennungseinrichtung, vorzugsweise mit angeschlossener Bilderkennung, ausgebildet.

Es ist auch möglich, dass eine solche Verschmutzungserkennungseinrichtung kraftfahrzeugseitig, insbesondere an dem kraftfahrzeugseitigen Koppelmodul oder in das kraftfahrzeugseitige Koppelmodul integriert, angeordnet ist. Dies hat den Vorteil, dass eine solche Verschmutzungserkennungseinrichtung einen besonders guten, freien Blick auf das koppeleinrichtungsseitige Koppelmodul hat. Zugleich kann in einfacher Weise dem Fahrer eines Kraftfahrzeugs eine Verschmutzung des Koppelmoduls angezeigt werden.

Zusätzlich oder alternativ ist es möglich, dass die Koppeleinrichtung eine Verschmutzungserkennungseinrichtung aufweist, die eingerichtet ist, um eine Verschmutzung des kraftfahrzeugseitigen Koppelmoduls zu erkennen. Diese kann ebenfalls als optische Erkennungseinrichtung, insbesondere mit angeschlossener Bilderkennung, ausgebildet sein.

Die Aufgabe wird auch gelöst, indem ein Energiezuführsystem zur Zuführung von Energie in ein Kraftfahrzeug geschaffen wird, wobei das Energiezuführsystem eine Energiezuführeinrichtung nach einem der zuvor beschriebenen Ausführungsbeispiele aufweist. Weiterhin weist das Energiezuführsystem ein Kraftfahrzeug auf, wobei das Kraftfahrzeug an einer Unterseite ein Koppelmodul aufweist, das eingerichtet ist zur Wirkverbindung mit der Koppeleinrichtung der Energiezuführeinrichtung. In Zusammenhang mit dem Energiezuführsystem ergeben sich insbesondere die Vorteile, die bereits in Zusammenhang mit der Energiezuführeinrichtung erläutert wurden.

Das Energiezuführsystem weist also insbesondere zwei Koppelmodule auf, nämlich ein erstes Koppelmodul, welches der Koppeleinrichtung zugeordnet ist, und welches auch koppeleinrichtungsseitiges Koppelmodul bezeichnet wird, sowie ein zweites Koppelmodul, welches dem Kraftfahrzeug zugeordnet ist, und welches auch als kraftfahrzeugseitiges Koppelmodul bezeichnet wird. Das erste Koppelmodul und das zweite Koppelmodul sind so aufeinander abgestimmt, dass sie miteinander gekoppelt werden können, um eine Wirkverbindung zwischen der Energiezuführeinrichtung und dem Kraftfahrzeug herzustellen.

Im Fall der Zuführung von chemischer Energie ist das zweite Koppelmodul vorzugsweise als Schlauch- oder Tankstutzen ausgebildet. Zur Zuführung von elektrischer Energie ist das zweite Koppelmodul vorzugsweise als elektrisches Verbindungsmittel, insbesondere als Steckeraufnahme zur Aufnahme eines als elektrischer Steckerkopf ausgebildeten, ersten Koppelmoduls ausgebildet. Dabei sind das erste Koppelmodul und das zweite Koppelmodul so aufeinander abgestimmt, dass sie miteinander zusammenwirken können. Die elektrische Steckeraufnahme des zweiten Koppelmoduls entspricht bevorzugt einer zugelassenen Steckernorm nach IEC 62196 in der an dem den Zeitrang der vorliegenden Anmeldung bestimmenden Tag geltenden Fassung.

Vorzugsweise weist das zweite Koppelmodul eine Schutzeinrichtung, insbesondere eine Schutzklappe und besonders bevorzugt eine elektromechanisch bewegliche Schutzklappe auf, die in eine Offenstellung und eine Geschlossenstellung verlagerbar ist, und welche eingerichtet ist, um in ihrer Geschlossenstellung den Eintritt von Schmutz, Feuchtigkeit, Schnee, Spritzwasser, und/oder anderen Umwelteinflüssen, insbesondere beim Fahren des Kraftfahrzeugs, in den Bereich des zweiten Koppelmoduls zu verhindern. Die Schutzeinrichtung wird vorzugsweise kurz vor dem Koppeln der Koppelmodule in ihrer Offenstellung verlagert, sowie nach Trennung der Wirkverbindung wieder geschlossen. Sie ist insbesondere während einer Fahrt des Kraftfahrzeugs geschlossen, sodass kein Schmutz eindringen kann.

Vorzugsweise weist die Schutzeinrichtung eine Mehrzahl von Klappen auf, die besonders bevorzugt so ausgeführt sind, dass sie fast 180° relativ zu ihrer geschlossenen Position in ihre Offenstellung schwenkbar sind, während die Koppeleinrichtung noch nicht unter dem zweiten Koppelmodul angeordnet ist. Vorteilhaft hieran ist, dass dadurch ein hinreichend großer Bereich durch die aufgeklappten Klappen nach unten zu der Koppeleinrichtung hin geschützt ist, der frei ist von herabtropfendem Wasser oder Schmutz. Alternativ ist es auch möglich, dass die Schutzeinrichtung eine drehbare, schwenkbare oder anderweitig verlagerbare Klappe aufweist, insbesondere eine Klappe, die in eine Ebene, welche parallel zu der Verlagerungsebene der Koppeleinrichtung angeordnet ist, also insbesondere horizontal, durch eine Drehbewegung weggedreht werden kann.

Gemäß einer Weiterbildung der Erfindung ist vorgesehen, dass das Energiezuführsystem eine Kommunikationseinrichtung zur Übertragung von Informationen zwischen der Energiezuführeinrichtung und dem Kraftfahrzeug aufweist. Dabei ist es beispielsweise möglich, als Information zu übermitteln, ob eine Wirkverbindung zur Energiezufuhr hergestellt werden soll, und/oder ob die Wirkverbindung getrennt werden soll, insbesondere wenn das Kraftfahrzeug durch einen Nutzer verwendet werden soll. Beispielsweise ist es möglich, dass eine solche Information beim Betreten des Kraftfahrzeugs durch einen Fahrer an die Energiezuführeinrichtung übermittelt wird.

Die Kommunikationseinrichtung weist bevorzugt ein erstes, koppeleinrichtungsseitiges Kommunikationsmodul auf. Insbesondere weist die Koppeleinrichtung dieses erste Kommunikationsmodul auf. Die Kommunikationseinrichtung weist weiterhin ein zweites, kraftfahrzeugseitiges Kommunikationsmodul auf. Insbesondere weist das Kraftfahrzeug dieses zweite Kommunikationsmodul auf. Die Kommunikationsmodule des Kraftfahrzeugs einerseits und der Koppeleinrichtung andererseits sind eingerichtet, um miteinander eine Wirkverbindung zur Kommunikationsübertragung einzurichten. Dies erfolgt bevorzugt drahtlos, insbesondere über eine Funkverbindung, vorzugsweise über WLAN oder Bluetooth, oder über eine optische Wirkverbindung, beispielsweise über eine Infrarotschnittstelle.

Zusätzlich oder alternativ ist es möglich, dass die Energieleitung für eine Kommunikation und/oder Datenübertragung zwischen der Koppeleinrichtung und der Andockstation eingerichtet ist.

Bei einem bevorzugten Ausführungsbeispiel der Energiezuführeinrichtung ist zusätzlich oder alternativ vorgesehen, dass das erste Kommunikationsmodul zur Wirkverbindung, insbesondere Informationsübertragung, mit einem externen elektronischen Gerät, insbesondere einem Mobiltelefon, insbesondere einem Smartphone, eingerichtet ist. Bevorzugt ist diese Kommunikationseinrichtung als drahtlose Kommunikationseinrichtung ausgebildet, wobei sie vorzugsweise eine Kopplung eines elektronischen Geräts mit der Energiezuführeinrichtung über eine Funkverbindung, insbesondere WLAN oder Bluetooth, oder über eine optische Wirkverbindung, beispielsweise eine Infrarotschnittstelle, aufweist.

Das zweite, kraftfahrzeugseitige Kommunikationsmodul ist vorzugsweise ebenfalls für eine drahtlose Kommunikation, insbesondere auf eine der zuvor genannten Arten, eingerichtet. Über drahtlose Kommunikation kann dann festgestellt werden, ob ein Fahrzeug in der Nähe der Koppeleinrichtung angehalten hat, wobei ein Kommunikationsvorgang gestartet werden kann. Dieser beinhaltet bevorzugt den Austausch von Informationen zur Bereitschaft zur Energiezufuhr, Berechtigungsinformationen, sowie Informationen über technische Parameter der im Fahrzeug sowie an der Koppeleinrichtung installierten Schnittstellen und Energiezufuhrmöglichkeiten.

Die Aufgabe wird schließlich auch gelöst, indem ein Verfahren für eine erfindungsgemäße Energiezuführeinrichtung oder eine Energiezuführeinrichtung nach einem der zuvor beschriebenen Ausführungsbeispiele zum Zuführen von Energie in ein Kraftfahrzeug geschaffen wird, bei welchem eine Koppeleinrichtung frei unter einem Kraftfahrzeug verlagert wird, wobei die Koppeleinrichtung mit dem Kraftfahrzeug zur Zuführung von Energie in das Kraftfahrzeug an einer Unterseite des Kraftfahrzeugs wirkverbunden wird, und wobei dem Kraftfahrzeug über die Koppeleinrichtung Energie zugeführt wird. In Zusammenhang mit dem Verfahren ergeben sich insbesondere die Vorteile, die bereits in Zusammenhang mit der Energiezuführeinrichtung und dem Energiezuführsystem erläutert wurden.

Die Koppeleinrichtung wird bevorzugt zu einer kraftfahrzeugseitigen Schnittstelle verlagert, die an der Unterseite des Kraftfahrzeugs, insbesondere an einem Unterboden desselben, angeordnet ist. Die Wirkverbindung wird dabei insbesondere zwischen der Koppeleinrichtung und der kraftfahrzeugseitigen Schnittstelle hergestellt.

Dass die Koppeleinrichtung frei unter dem Kraftfahrzeug verlagert wird, bedeutet insbesondere, dass sie ohne mechanische Begrenzung ihres Verlagerungspfads, insbesondere ohne Fixierung und ganz besonders ohne Führung durch Schienen, frei unter dem Kraftfahrzeug verlagert wird. Bevorzugt wird die Koppeleinrichtung selbstfahrend verlagert, wobei besonders bevorzugt eine als Robotereinheit ausgebildete Koppeleinrichtung verwendet wird.

Gemäß einer Weiterbildung der Erfindung ist vorgesehen, dass die Koppeleinrichtung unter einem Koppelmodul des Kraftfahrzeugs, insbesondere unter dem zuvor beschriebenen, zweiten Koppelmodul, positioniert wird, wobei ein Koppelmodul der Koppeleinrichtung, insbesondere das zuvor beschriebene erste Koppelmodul, quer, insbesondere senkrecht zu einer Verlagerungsebene der Koppeleinrichtung verlagert wird, um die Wirkverbindung zwischen dem koppeleinrichtungsseitigen Koppelmodul und dem kraftfahrzeugseitigen Koppelmodul herzustellen. Dabei wird das koppeleinrichtungsseitige Koppelmodul besonders bevorzugt entlang der Kraftfahrzeug-Hochrichtung oder Z-Richtung verlagert, um die Wirkverbindung herzustellen.

Gemäß einer Weiterbildung der Erfindung ist vorgesehen, dass die Koppeleinrichtung Informationen und/oder Daten an das Kraftfahrzeug sendet, von dem Kraftfahrzeug empfängt, und/oder mit dem Kraftfahrzeug austauscht. Besonders bevorzugt erfolgt das Senden, Empfangen und/oder Austauschen von Informationen und/oder Daten drahtlos, insbesondere über eine Funkverbindung, vorzugsweise über WLAN oder Bluetooth oder über eine optische Wirkverbindung, beispielsweise über eine Infrarotschnittstelle. Als Daten oder Informationen wird/werden bevorzugt übermittelt, ob eine Wirkverbindung zur Energiezufuhr hergestellt werden soll, und/oder ob die Wirkverbindung getrennt werden soll, insbesondere wenn das Kraftfahrzeug durch einen Nutzer verwendet werden soll. Beispielsweise ist es möglich, dass eine solche Information beim Betreten des Kraftfahrzeugs durch einen Fahrer an die Koppeleinrichtung oder die Energiezuführeinrichtung übermittelt wird. Es kann auch übermittelt werden, ob ein Fahrzeug in der Nähe der Koppeleinrichtung angehalten hat, wobei in diesem Fall ein Kommunikationsvorgang zwischen der Koppeleinrichtung und dem Kraftfahrzeug gestartet werden kann. Dieser beinhaltet bevorzugt den Austausch von Informationen zur Bereitschaft zur Energiezuführung, Berechtigungsinformationen, sowie Informationen über technische Parameter der im Fahrzeug sowie an der Koppeleinrichtung installierten Schnittstellen und Energiezuführmöglichkeiten.

Gemäß einer Weiterbildung der Erfindung ist vorgesehen, dass die Wirkverbindung der Koppeleinrichtung mit dem Kraftfahrzeug nach dem Zuführen von Energie in das Kraftfahrzeug getrennt wird, wobei die Koppeleinrichtung - vorzugsweise anschließend - aus dem Bereich unter dem Kraftfahrzeug wegverlagert wird. Insbesondere fährt die Koppeleinrichtung vorzugsweise unter dem Kraftfahrzeug hervor und begibt sich in einen Bereich, der von dem Kraftfahrzeug beabstandet angeordnet ist, sodass dieses insbesondere ohne Gefahr für die Koppeleinrichtung losfahren kann. Dabei kann die Koppeleinrichtung insbesondere zu einer hierzu vorgesehenen Andockstation verlagert werden.

Es ist grundsätzlich möglich, dass die Wirkverbindung zuerst getrennt wird, wobei danach die Koppeleinrichtung unter dem Kraftfahrzeug wegverlagert wird. Es ist aber auch möglich, dass die Koppeleinrichtung gleichzeitig mit dem Trennen der Wirkverbindung oder zeitlich überlappend mit dem Trennen der Wirkverbindung unter dem Kraftfahrzeug wegverlagert wird. Insbesondere ist es möglich, dass die Wirkverbindung getrennt wird, indem die Koppeleinrichtung unter dem Kraftfahrzeug wegverlagert wird.

Gemäß einer Weiterbildung der Erfindung ist vorgesehen, dass dem Kraftfahrzeug elektrische Energie über die Wirkverbindung mit der Koppeleinrichtung zugeführt wird. Dabei ist insbesondere eine induktive Wirkverbindung oder eine elektrische Wirkverbindung über eine elektrische Steckverbindung möglich, wobei beispielsweise das koppeleinrichtungsseitige Koppelmodul als Stecker und das kraftfahrzeugseitige Koppelmodul als Steckdose - oder umgekehrt - ausgebildet sein können.

Gemäß einer bevorzugten Ausgestaltung ist vorgesehen, dass die Koppeleinrichtung automatisch eine Wirkverbindung mit dem Kraftfahrzeug herstellt. Alternativ oder zusätzlich ist bevorzugt vorgesehen, dass die Koppeleinrichtung die Wirkverbindung beim Einsteigen eines Fahrers in das Kraftfahrzeug oder beim Starten des Kraftfahrzeugs, oder zu einem anderen geeigneten Zeitpunkt, automatisch trennt. Das Kraftfahrzeug kann so insbesondere automatisch mit Energie geladen werden.

Zusätzlich oder alternativ ist bevorzugt vorgesehen, dass die Koppeleinrichtung über ein externes elektronisches Gerät, insbesondere ein Mobiltelefon, vorzugsweise ein Smartphone, gesteuert wird. Somit kann insbesondere bedarfsgerecht ein Energiezuführvorgang durch einen Nutzer des Kraftfahrzeugs gestartet oder beendet werden.

Die Beschreibung der Energiezuführeinrichtung sowie des Energiezuführsystems einerseits und des Verfahrens andererseits sind komplementär zueinander zu verstehen. Verfahrensschritte, die explizit oder implizit in Zusammenhang mit der Energiezuführeinrichtung oder dem Energiezuführsystem beschrieben wurden, sind bevorzugt einzeln oder miteinander kombiniert Schritte einer bevorzugten Ausführungsform des Verfahrens. Merkmale der Energiezuführeinrichtung oder des Energiezuführsystems, die in Zusammenhang mit dem Verfahren beschrieben wurden, sind bevorzugt einzeln oder miteinander kombiniert Merkmale eines bevorzugten Ausführungsbeispiels der Energiezuführeinrichtung und/oder des Energiezuführsystems. Das Verfahren zeichnet sich bevorzugt durch wenigstens einen Verfahrensschritt aus, der durch wenigstens ein Merkmal eines erfindungsgemäßen oder bevorzugten Ausführungsbeispiels der Energiezuführeinrichtung oder des Energiezuführsystems bedingt ist. Das Energiezuführsystem und/oder die Energiezuführeinrichtung zeichnet/zeichnen sich bevorzugt durch wenigstens ein Merkmal aus, welches durch wenigstens einen Schritt einer erfindungsgemäßen oder bevorzugten Ausführungsform des Verfahrens bedingt ist.

Die Erfindung wird im Folgenden anhand der Zeichnung näher erläutert. Dabei zeigen:
- Figur 1: eine schematische Darstellung eines ersten Ausführungsbeispiels eines Energiezuführsystems;
- Figur 2: eine schematische Darstellung eines nicht zur Erfindung gehörenden Beispiels einer Koppeleinrichtung;
- Figur 3: eine schematische Darstellung eines Ausführungsbeispiels einer Koppeleinrichtung;
- Figur 4: eine schematische Darstellung des Ausführungsbeispiels der Koppeleinrichtung gemäß Figur 3 von unten, und
- Figur 5: eine schematische Darstellung eines Koppelvorgangs zwischen Koppelmodulen eines Ausführungsbeispiels eines Energiezuführsystems.

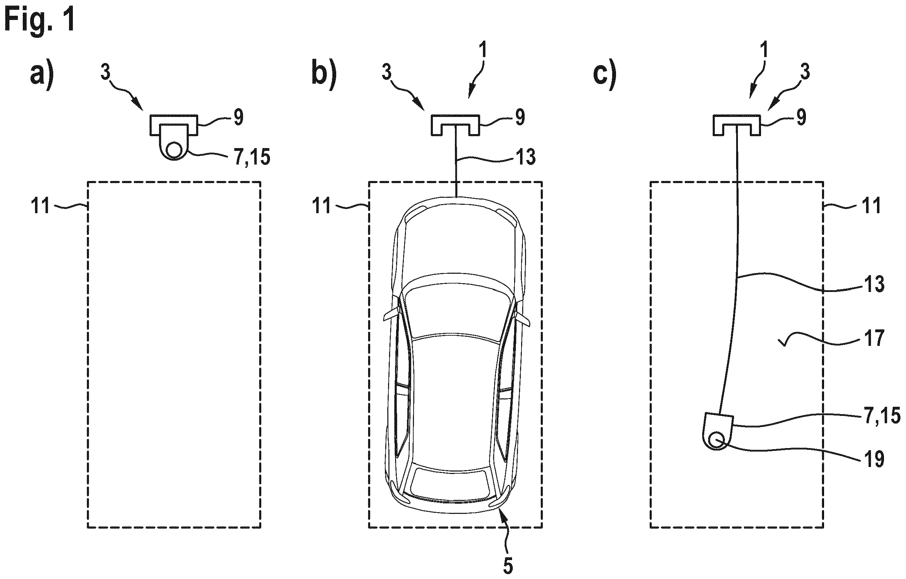

Figur 1 zeigt eine schematische Darstellung eines ersten Ausführungsbeispiels eines Energiezuführsystems 1, welches eingerichtet ist zur Zuführung von Energie in ein Kraftfahrzeug, wobei das Energiezuführsystem 1 eine Energiezuführeinrichtung 3 und ein Kraftfahrzeug 5 aufweist.

Die Energiezuführeinrichtung 3 weist eine Koppeleinrichtung 7 auf, die eingerichtet ist zum Herstellen einer Wirkverbindung zwischen der Energiezuführeinrichtung 3 und dem Kraftfahrzeug 5 zum Zuführen von Energie in das Kraftfahrzeug 5. Sie weist außerdem eine stationäre Andockstation 9 auf, die vorzugsweise fest in einem Boden verankert ist.

In Figur 1a) ist ein Parkplatz 11 dargestellt, dem die Energiezuführeinrichtung 3 zugeordnet ist. Dabei ist das Kraftfahrzeug 5 hier nicht dargestellt, und die Koppeleinrichtung 7 ist in ihrer Ruhestellung an der Andockstation 9 angedockt.

In Figur 1b) ist das Kraftfahrzeug 5 auf dem Parkplatz 11 abgestellt, und die Koppeleinrichtung 7 ist unter das Kraftfahrzeug 5 verlagert und mit diesem wirkverbunden. Die Koppeleinrichtung 7 ist mit der Andockstation 9 über eine Energieleitung 13 verbunden.

Vorzugsweise ist die Energiezuführeinrichtung eingerichtet zur Zuführung von elektrischer Energie zu dem Kraftfahrzeug 5, wobei die Energieleitung 13 als Stromkabel ausgebildet ist. Die Andockstation 9 ist in diesem Fall vorzugsweise mit einem Stromnetzanschluss, insbesondere einem Haushaltsanschluss mit 220 V, 230 V oder 380 V Nennspannung, verbunden. somit ist elektrische Energie aus einer externen Quelle, hier insbesondere aus dem Haushaltsanschluss, über die Energiezuführeinrichtung 3 dem Kraftfahrzeug 5 zuführbar.

Die Koppeleinrichtung 7 ist frei unter dem Kraftfahrzeug 5 verlagerbar. Dabei ist sie insbesondere selbstfahrend ausgebildet. Besonders bevorzugt ist die Koppeleinrichtung 7 als Robotereinheit 15 ausgebildet.

Es ist möglich, dass die Energieleitung 13 zugleich für eine Kommunikation und/oder Datenübertragung zwischen der Koppeleinrichtung 7 und der Andockstation 9 eingerichtet ist.

In Figur 1c) ist das Energiezuführsystem 1 in dem in Figur 1b) gezeigten Zustand dargestellt, jedoch unter Weglassung des Kraftfahrzeugs 5, sodass die Koppeleinrichtung 7 mit der Energieleitung 13 unter dem Kraftfahrzeug 5 sichtbar ist. Die Koppeleinrichtung 7 ist frei, insbesondere ohne Führung und insbesondere ohne mechanische Begrenzung auf dem Parkplatz 11 unter dem Kraftfahrzeug 5 verlagerbar und vorzugsweise eingerichtet, um selbsttätig ein kraftfahrzeugseitiges Koppelmodul aufzufinden und eine Wirkverbindung mit diesem herzustellen.

Hierzu weist die Koppeleinrichtung 7 - insbesondere bei eingefahrenem Koppelmodul - eine maximale Höhe über einer Bodenfläche 17 des Parkplatzes 11, auf welcher die Koppeleinrichtung 7 aufsteht, von höchstens 25 cm, vorzugsweise höchstens 22 cm, vorzugsweise höchstens 20 cm, vorzugsweise höchstens 15 cm, vorzugsweise höchstens 11 cm, vorzugsweise mindestens 2 cm, vorzugsweise mindestens 3 cm, vorzugsweise mindestens 4 cm, vorzugsweise mindestens 5 cm, vorzugsweise mindestens 6 cm, vorzugsweise mindestens 7 cm, vorzugsweise mindestens 8 cm, vorzugsweise mindestens 9 cm, vorzugsweise mindestens 10 cm, auf. Besonders bevorzugt weist die Koppeleinrichtung 7 eine maximale Höhe von 8 cm auf.

Zur Herstellung der Wirkverbindung mit dem Kraftfahrzeug 5 weist die Koppeleinrichtung 7 insbesondere ein erstes Koppelmodul 19 auf, welches besonders bevorzugt als elektrischer Stecker ausgebildet ist oder wenigstens eine Induktionsspule aufweist. Es ist auch möglich, dass das Koppelmodul 19 sowohl eine Induktionsspule aufweist als auch einen elektrischen Stecker. Das Koppelmodul 19 ist vorzugsweise senkrecht zur Bildebene von Figur 1 und damit senkrecht zu der Bodenfläche 17, mithin insbesondere in vertikaler Richtung, verlagerbar, um eine Kopplung mit dem kraftfahrzeugseitigen Koppelmodul herstellen zu können.

Die Andockstation 9 weist bevorzugt eine hier nicht dargestellte Reinigungsvorrichtung auf, die eingerichtet ist, um die Koppeleinrichtung 7 beim Andocken an die Andockstation von Verschmutzungen, insbesondere Schmutz oder Schnee, zu befreien.

Die Koppeleinrichtung 7 ist insbesondere in der Lage, unabhängig von der Parkposition sowie Parkrichtung des Kraftfahrzeugs 5 dessen Koppelmodul zu finden, indem sie mittels eigenem Antrieb und Lenkung unter dem Kraftfahrzeug 5 beweglich ist.

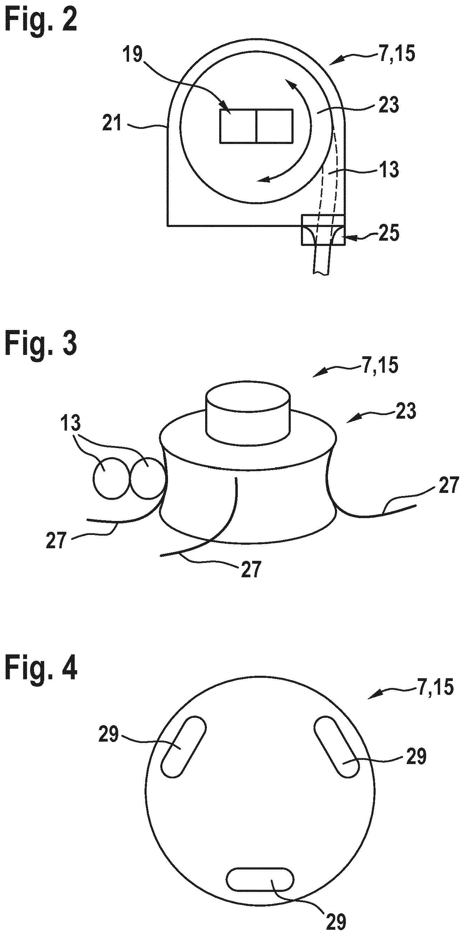

Figur 2 zeigt eine schematische Darstellung eines nicht zur Erfindung gehörenden Beispiels einer Koppeleinrichtung 7. Gleiche und funktionsgleiche Elemente sind mit gleichen Bezugszeichen versehen, sodass insofern auf die vorangegangene Beschreibung verwiesen wird. Bei diesem Beispiel weist die Koppeleinrichtung 7 eine relativ zu einem Gehäuse 21 der Koppeleinrichtung 7 drehbare Aufwickeleinrichtung 23 auf, die zum Auf- und Abwickeln der Energieleitung 13 eingerichtet ist. Die Aufwickeleinrichtung 23 ist vorzugsweise als Kabeltrommel ausgebildet. Weiterhin weist die Koppeleinrichtung 7 eine Reinigungseinrichtung 25 auf, die eingerichtet ist, um die Energieleitung 13 insbesondere beim Aufwickeln von Schmutz, Schnee und/oder anderen Anhaftungen zu reinigen. Die Aufwickeleinrichtung 23 ist dabei vorzugsweise innerhalb des Gehäuses 21 angeordnet, sodass die Energieleitung 13 geschützt in dem Gehäuse 21 untergebracht werden kann.

Das erste Koppelmodul 19 ist hier zentral in der Abwickeleinrichtung 23 angeordnet. Besonders bevorzugt ist es allerdings relativ zu dem Gehäuse 21 - bezüglich einer Bewegung in Umfangsrichtung - feststehend montiert, sodass es insbesondere nicht an der Drehbewegung der Aufwickeleinrichtung 23 teilnimmt. Dies ermöglicht eine Positionierung des ersten Koppelmoduls 19 unabhängig von der Drehbewegung der Aufwickeleinrichtung 23. Allerdings ist das erste Koppelmodul 19 - wie bereits zuvor ausgeführt - bevorzugt in einer Richtung senkrecht zur Bildebene von Figur 2 - mithin insbesondere in vertikaler Richtung - ein- und ausfahrbar, um eine Kopplung mit dem Kraftfahrzeug 5 zu bewirken.

Figur 3 zeigt eine schematische Darstellung eines Ausführungsbeispiels einer Koppeleinrichtung 7. Gleiche und funktionsgleiche Elemente sind mit gleichen Bezugszeichen versehen, sodass insofern auf die vorangegangene Beschreibung verwiesen wird. Hier ist die Koppeleinrichtung 7 insgesamt als Aufwickeleinrichtung 23 ausgebildet, wobei die Energieleitung 13 auf einem äußeren Umfang der Koppeleinrichtung 7 aufwickelbar ist. Dabei wird die Energieleitung 13 insbesondere während einer Fortbewegung der Koppeleinrichtung 7 durch eine überlagerte Drehbewegung derselben auf- und abgewickelt. Die Aufwickeleinrichtung 23 weist radial nach außen abragende Finger oder Rechen 27 auf, welche die Energieleitung 13 aufnehmen.

Figur 4 zeigt eine schematische Darstellung des Ausführungsbeispiels der Koppeleinrichtung 7 gemäß Figur 3 in einer Ansicht von unten. Gleiche und funktionsgleiche Elemente sind mit gleichen Bezugszeichen versehen, sodass insofern auf die vorangegangene Beschreibung verwiesen wird. Dabei sind an der Unterseite der Koppeleinrichtung 7 auf einer gedachten, konzentrisch zu einem Mittel- oder Schwerpunkt der Koppeleinrichtung 7 angeordneten Umfangslinie drei Räder 29 angeordnet, die separat und unabhängig voneinander ansteuerbar sind. Die Räder weisen dabei bezüglich ihrer Orientierung entlang der Umfangslinie, mithin in Umfangsrichtung. Durch geeignete, unabhängige Ansteuerung der Räder 29 kann eine Fortbewegung der Koppeleinrichtung 7 in alle Richtungen, vorzugsweise inklusive einer überlagerten Drehbewegung, bewirkt werden.

Somit kann sich die Koppeleinrichtung 7 zugleich fortbewegen und die Energieleitung 13 auf- oder abwickeln.

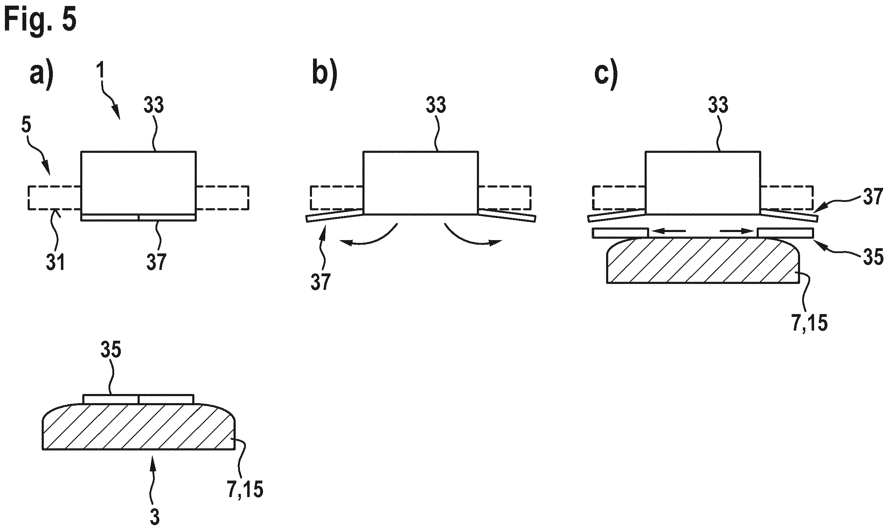

Figur 5 zeigt eine schematische Darstellung eines Ausführungsbeispiels des Energiezuführsystems 1, wobei hier ein Koppelvorgang zwischen der Energiezuführeinrichtung 3 und dem Kraftfahrzeug 5 schematisch dargestellt ist. Gleiche und funktionsgleiche Elemente sind mit gleichen Bezugszeichen versehen, sodass insofern auf die vorangegangene Beschreibung verwiesen wird. Dabei wird hier deutlich, dass das Kraftfahrzeug 5 an seiner Unterseite 31 ein zweites Koppelmodul 33 aufweist, das - im Fall der Übertragung elektrischer Energie - vorzugsweise als Steckeraufnahme oder Induktionsspule ausgebildet ist. Im Fall der Übertragung chemischer Energie ist das zweite Koppelmodul 33 vorzugsweise als Tankstutzen ausgebildet.

Dem Koppelmodul 19 ist eine verlagerbare Abdeckeinrichtung 35 zugeordnet, die hier bevorzugt zwei relativ zueinander verlagerbare Klappen aufweist, die von einer Geschlossenstellung in eine Offenstellung und zurück verlagerbar sind. In Figur 5 a) ist die Abdeckeinrichtung 35 in ihrer Geschlossenstellung dargestellt, sodass hier das erste Koppelmodul 19 vor Schmutz und Nässe geschützt ist.

Auch das zweite Koppelmodul 33 weist vorzugsweise eine Schutzeinrichtung 37 auf, die ebenfalls zwei relativ zueinander verlagerbare Klappen aufweist, die in einer Offenstellung und in einer Geschlossenstellung anordenbar sind. In Figur 5 a) ist die Schutzeinrichtung 37 in ihrer Geschlossenstellung dargestellt, sodass das zweite Koppelmodul 33 vor Schmutz und Nässe geschützt ist.

In Figur 5 a) sind das Kraftfahrzeug 5 und die Koppeleinrichtung 7 lediglich schematisch untereinander angeordnet. In der hier dargestellten Funktionsstellung sind sie tatsächlich bevorzugt noch nicht untereinander positioniert. Um einen Koppelvorgang einzuleiten, wird vorzugsweise zunächst - bevor die Koppeleinrichtung 7 unter dem zweiten Koppelmodul 33 angeordnet wird - die Schutzeinrichtung 37 - wie in Figur 5 b) dargestellt - in ihre Offenstellung verlagert, indem insbesondere die beiden Klappen der Schutzreinrichtung 37 relativ zueinander verschwenkt werden, wobei sie nach außen geklappt werden und eine äußere Umgebung des zweiten Koppelmoduls 33 abdecken, sodass hier keine Nässe und kein Schmutz auf das heranverlagerte erste Koppelmodul 19 tropfen oder fallen kann. Anschließend wird wie in Figur 5 c) dargestellt, die Koppeleinrichtung 7 unter dem zweiten Koppelmodul 33 positioniert, und vorzugsweise wird erst dann die Abdeckeinrichtung 35 geöffnet, hier durch Verschieben der Klappen der Abdeckeinrichtung 35 relativ zueinander. Das in der Koppeleinrichtung 7 angeordnete erste Koppelmodul kann dann in vertikaler Richtung ausfahren und eine Wirkverbindung mit dem zweiten Koppelmodul 33 herstellen.

Zur Kopplung des ersten Koppelmoduls 19 mit dem zweiten Koppelmodul 33 ist bevorzugt eine mechanische Führung in dem Koppelmodul 33 vorgesehen.

Eine Entkopplung erfolgt bevorzugt in umgekehrter Reichenfolge, indem zuerst das erste Koppelmodul 19 von dem zweiten Koppelmodul 33 gelöst und in die Koppeleinrichtung 7 hineinverlagert wird, wonach die Abdeckeinrichtung 35 geschlossen wird. Anschließend wird die Koppeleinrichtung 7 von dem zweiten Koppelmodul 33 wegverlagert, wonach die Schutzeinrichtung 37 geschlossen wird.

Vorzugsweise weist die Koppeleinrichtung 7 eine hier nicht dargestellte Positioniereinrichtung zur Positionierung der Koppeleinrichtung 7 unter dem zweiten Koppelmodul 33 auf, wobei die Positioniereinrichtung insbesondere einen Umgebungssensor sowie eine Steuerungseinrichtung aufweisen kann. Weiterhin weist das Energiezuführsystem 1 bevorzugt eine Kommunikationseinrichtung zur Übertragung von Informationen und/oder Daten zwischen der Energiezuführeinrichtung 3 und dem Kraftfahrzeug 5 auf, wobei bevorzugt dem Kraftfahrzeug 5 und der Koppeleinrichtung 7 jeweils ein Kommunikationsmodul zugeordnet ist. Die Kommunikation kann dabei insbesondere drahtlos erfolgen.

Insgesamt zeigt sich, dass mit der Energiezuführeinrichtung 3, dem Energiezuführsystem 1 und dem Verfahren eine sehr komfortable und bequeme Energiezufuhr von einer insbesondere externen Energiequelle an ein Kraftfahrzeug 5 möglich ist, wobei insbesondere eine selbsttätige Energiezufuhr ohne aktiven Eingriff eines Fahrers des Kraftfahrzeugs 5 erfolgen kann.

## Patentansprüche

1. Energiezuführeinrichtung (3) zur Zuführung von Energie in ein Kraftfahrzeug (5), mit einer Koppeleinrichtung (7), eingerichtet zum Herstellen einer Wirkverbindung zwischen der Energiezuführeinrichtung (3) und einem Kraftfahrzeug (5) zum Zuführen von Energie in das Kraftfahrzeug (5), wobei die Koppeleinrichtung (7) frei unter einem Kraftfahrzeug (5) verlagerbar ausgebildet ist, **dadurch gekennzeichnet, dass** die Koppeleinrichtung (7) selbst als Aufwickeleinrichtung (23) ausgebildet und eingerichtet ist, um während ihrer Verlagerung eine einer Verlagerungsbahn überlagerte Rotationsbewegung durchzuführen, und dabei eine Energieleitung abhängig von ihrer Verlagerungsrichtung auf-oder abzuwickeln, wobei die Koppeleinrichtung (7) an ihrer Unterseite drei Räder (29) aufweist, die auf einer gemeinsamen Kreislinie und bezüglich ihrer Abrollrichtung in Umfangsrichtung gesehen orientiert angeordnet sind.

2. Energiezuführeinrichtung (3) nach Anspruch 1, **dadurch gekennzeichnet, dass** die Koppeleinrichtung (7) selbstfahrend ausgebildet ist.

3. Energiezuführeinrichtung (3) nach einem der vorherigen Ansprüche, **dadurch gekennzeichnet, dass** die Koppeleinrichtung (7) als Robotereinheit (15) ausgebildet ist.

4. Energiezuführeinrichtung (3) nach einem der vorherigen Ansprüche, **dadurch gekennzeichnet, dass** die Koppeleinrichtung (7) ein Koppelmodul (19) aufweist, welches vorzugsweise quer, bevorzugt senkrecht, zu einer Verlagerungsebene der Koppeleinrichtung (7) verlagerbar ist, wobei das Koppelmodul (19) vorzugsweise als elektrischer Stecker ausgebildet ist und/oder wenigstens eine Induktionsspule aufweist.

5. Energiezuführeinrichtung (3) nach einem der vorherigen Ansprüche, **dadurch gekennzeichnet, dass** die Koppeleinrichtung (7) eine maximale Höhe über einer Bodenfläche (17), auf welcher die Koppeleinrichtung (7) aufsteht, aufweist, welche höchstens 25 cm, vorzugsweise höchstens 22 cm, vorzugsweise höchstens 20 cm, vorzugsweise höchstens 15 cm, vorzugsweise höchstens 11 cm, vorzugsweise mindestens 2 cm, vorzugsweise mindestens 3 cm, vorzugsweise mindestens 4 cm, vorzugsweise mindestens 5 cm, vorzugsweise mindestens 6 cm, vorzugsweise mindestens 7 cm, vorzugsweise mindestens 8 cm, vorzugsweise mindestens 9 cm, vorzugsweise mindestens 10 cm, bevorzugt 8 cm, beträgt.

6. Energiezuführeinrichtung (3) nach einem der vorherigen Ansprüche, **gekennzeichnet durch** eine Andockstation (9) für die Koppeleinrichtung (7).

7. Energiezuführeinrichtung (3) nach einem der vorherigen Ansprüche, **dadurch gekennzeichnet, dass** die Koppeleinrichtung (7) eine Positioniereinrichtung zur Positionierung der Koppeleinrichtung (7) unter einem Koppelmodul (33) eines Kraftfahrzeugs (5) aufweist.

8. Energiezuführeinrichtung (3) nach Anspruch 4, **dadurch gekennzeichnet, dass** die Koppeleinrichtung (7) eine verlagerbare Abdeckeinrichtung (35) zur Abdeckung und Freigabe des Koppelmoduls (19) aufweist.

9. Energiezuführsystem (1) zur Zuführung von Energie in ein Kraftfahrzeug (5), mit einer Energiezuführeinrichtung (3) nach einem der Ansprüche 1 bis 8, und mit einem Kraftfahrzeug (5), wobei das Kraftfahrzeug (5) an einer Unterseite (31) ein Koppelmodul (33) aufweist, das eingerichtet ist zur Wirkverbindung mit der Koppeleinrichtung (7) der Energiezuführeinrichtung (3).

10. Energiezuführsystem (1) nach Anspruch 9, **gekennzeichnet durch** eine Kommunikationseinrichtung zur Übertragung von Informationen und/oder Daten zwischen der Energiezuführeinrichtung (3) und dem Kraftfahrzeug (5).

11. Verfahren für eine Energiezuführeinrichtung (3) nach einem der Ansprüche 1 bis 8 zum Zuführen von Energie in ein Kraftfahrzeug (5), wobei
- eine Koppeleinrichtung (7) frei unter einem Kraftfahrzeug (5) verlagert wird, wobei
- die Koppeleinrichtung (7) mit dem Kraftfahrzeug (5) zur Zuführung von Energie in das Kraftfahrzeug (5) an einer Unterseite (31) des Kraftfahrzeugs (5) wirkverbunden wird, und wobei
- dem Kraftfahrzeug (5) über die Koppeleinrichtung (7) Energie zugeführt wird.

12. Verfahren nach Anspruch 11, **dadurch gekennzeichnet, dass** die Koppeleinrichtung (7) unter einem Koppelmodul (33) des Kraftfahrzeugs (5) positioniert wird, wobei ein Koppelmodul (19) der Koppeleinrichtung (7) quer, vorzugsweise senkrecht zu einer Verlagerungsebene der Koppeleinrichtung (7) verlagert wird, um die Wirkverbindung zwischen dem Koppelmodul (19) der Koppeleinrichtung (7) und dem Koppelmodul (33) des Kraftfahrzeugs (5) herzustellen.

13. Verfahren nach einem der Ansprüche 11 und 12, **dadurch gekennzeichnet, dass** die Koppeleinrichtung (7) Informationen und/oder Daten an das Kraftfahrzeug (5) sendet, von dem Kraftfahrzeug (5) empfängt, und/oder mit dem Kraftfahrzeug (5) austauscht.

14. Verfahren nach einem der Ansprüche 11 bis 13, **dadurch gekennzeichnet, dass** die Wirkverbindung der Koppeleinrichtung (7) mit dem Kraftfahrzeug (5) nach dem Zuführen von Energie in das Kraftfahrzeug (5) getrennt wird, wobei die Koppeleinrichtung (7) aus dem Bereich unter dem Kraftfahrzeug (5) wegverlagert wird.

15. Verfahren nach einem der Ansprüche 11 bis 14, **dadurch gekennzeichnet, dass** dem Kraftfahrzeug (5) elektrische Energie über die Wirkverbindung mit der Koppeleinrichtung (7) zugeführt wird.

## Claims

1. Energy supply device (3) for supply of energy to a motor vehicle (5), comprising a coupling device (7) arranged to produce an operative connection between the energy supply device (3) and a motor vehicle (5) for the supply of energy to the motor vehicle (5), wherein the coupling device (7) is configured to be freely displaceable under the motor vehicle (5), **characterised in that** the coupling device (7) is itself configured and arranged as a take-up device (23) to carry out during its displacement a rotational movement superimposed on a displacement path, and thereby, depending on its displacement direction, to wind up or unwind an energy conductor, wherein the coupling device (7) has three wheels (29) on its underside which are arranged on a common circular line and with respect to their direction of rolling are oriented in the circumferential direction.

2. Energy supply device (3) according to claim 1, **characterised in that** the coupling device (7) is configured to be self-propelled.

3. Energy supply device (3) according to any one of the preceding claims, **characterised in that** the coupling device (7) is configured as a robot unit (15).

4. Energy supply device (3) according to any one of the preceding claims, **characterised in that** the coupling device (7) has a coupling module (19) which can preferably be displaced laterally, preferably perpendicularly, to a displacement plane of the coupling device (7), wherein the coupling module (19) is preferably configured as an electrical plug and/or has at least one induction coil.

5. Energy supply device (3) according to any one of the preceding claims, **characterised in that** the coupling device (7) has a maximum height above a floor surface (17) on which the coupling device (7) stands, which is at most 25 cm, preferably at most 22 cm, preferably at most 20 cm, preferably at most 15 cm, preferably at most 11 cm, preferably at least 2 cm, preferably at least 3 cm, preferably at least 4 cm, preferably at least 5 cm, preferably at least 6 cm, preferably at least 7 cm, preferably at least 8 cm, preferably at least 9 cm, preferably at least 10 cm, preferably 8 cm.

6. Energy supply device (3) according to any one of the preceding claims, **characterised by** a docking station (9) for the coupling device (7).

7. Energy supply device (3) according to any one of the preceding claims, **characterised in that** the coupling device (7) has a positioning device for positioning the coupling device (7) under a coupling module (33) of a motor vehicle (5).

8. Energy supply device (3) according to claim 4, **characterised in that** the coupling device (7) has a displaceable cover device (35) for covering and releasing the coupling module (19).

9. Energy supply system (1) for supplying energy to a motor vehicle (5), comprising an energy supply device (3) according to any one of claims 1 to 8, and comprising a motor vehicle (5), wherein the motor vehicle (5) has on an underside (31) thereof a coupling module (33) which is arranged for operative connection with the coupling device (7) of the energy supply device (3).

10. Energy supply system (1) according to claim 9, **characterised by** a communication device for transmitting information and/or data between the energy supply device (3) and the motor vehicle (5).

11. Method for an energy supply device (3) according to any one of claims 1 to 8 to supply energy to a motor vehicle (5), wherein
- a coupling device (7) is freely displaced under a motor vehicle (5), wherein
- the coupling device (7) is, for supplying energy to the motor vehicle (5), operatively connected to the motor vehicle (5) at an underside (31) of the motor vehicle (5), and wherein
- energy is supplied to the motor vehicle (5) via the coupling device (7).

12. Method according to claim 11, **characterised in that** the coupling device (7) is positioned under a coupling module (33) of the motor vehicle (5), wherein a coupling module (19) of the coupling device (7) is displaced laterally, preferably perpendicularly to a displacement plane of the coupling device (7), in order to establish the operative connection between the coupling module (19) of the coupling device (7) and the coupling module (33) of the motor vehicle (5).

13. Method according to any one of claims 11 and 12, **characterised in that** the coupling device (7) transmits information and/or data to the motor vehicle (5), receives information and/or data from the motor vehicle (5) and/or exchanges information and/or data with the motor vehicle (5).

14. Method according to any one of claims 11 to 13, **characterised in that** the operative connection of the coupling device (7) to the motor vehicle (5) is broken after the supply of energy to the motor vehicle (5), wherein the coupling device (7) is displaced away from the area under the motor vehicle (5).

15. Method according to any one of claims 11 to 14, **characterised in that** electrical energy is supplied to the motor vehicle (5) via the operative connection with the coupling device (7).

## Revendications

1. Dispositif d'alimentation en énergie (3) pour l'alimentation en énergie d'un véhicule automobile (5), avec un dispositif de couplage (7), aménagé pour l'établissement d'une liaison active entre le dispositif d'alimentation en énergie (3) et un véhicule automobile (5) pour l'alimentation en énergie du véhicule automobile (5), dans lequel le dispositif de couplage (7) est réalisé de manière à pouvoir se déplacer librement sous un véhicule automobile (5), **caractérisé en ce que** le dispositif de couplage (7) est réalisé et aménagé lui-même comme dispositif d'enroulement (23) afin de réaliser pendant son déplacement un mouvement de rotation superposé à une bande de déplacement, et d'enrouler ou de dérouler une conduite d'énergie selon son sens de déplacement, dans lequel le dispositif de couplage (7) présente sur son côté inférieur trois roues (29) qui sont agencées orientées sur une ligne circulaire commune et par rapport à son sens de déroulement vu dans le sens périphérique.

2. Dispositif d'alimentation en énergie (3) selon la revendication 1, **caractérisé en ce que** le dispositif de couplage (7) est réalisé de manière automotrice.

3. Dispositif d'alimentation en énergie (3) selon l'une des revendications précédentes, **caractérisé en ce que** le dispositif de couplage (7) est réalisé comme unité de robot (15).

4. Dispositif d'alimentation en énergie (3) selon l'une des revendications précédentes, **caractérisé en ce que** le dispositif de couplage (7) présente un module de couplage (19) qui peut être déplacé de préférence transversalement, de préférence perpendiculairement, à un plan de déplacement du dispositif de couplage (7), dans lequel le module de couplage (19) est réalisé de préférence comme connecteur électrique et/ou présente au moins une bobine d'induction.

5. Dispositif d'alimentation en énergie (3) selon l'une des revendications précédentes, **caractérisé en ce que** le dispositif de couplage (7) présente une hauteur maximale sur une surface de fond (17), sur laquelle le dispositif de couplage (7) se situe, qui s'élève au plus à 25 cm, de préférence au plus à 22 cm, de préférence au plus à 20 cm, de préférence au plus à 15 cm, de préférence au plus à 11 cm, de préférence au moins à 2 cm, de préférence au moins à 3 cm, de préférence au moins à 4 cm, de préférence au moins à 5 cm, de préférence au moins à 6 cm, de préférence au moins à 7 cm, de préférence au moins à 8 cm, de préférence au moins à 9 cm, de préférence au moins à 10 cm, de préférence à 8 cm.

6. Dispositif d'alimentation en énergie (3) selon l'une des revendications précédentes, **caractérisé par** une station d'accueil (9) pour le dispositif de couplage (7).

7. Dispositif d'alimentation en énergie (3) selon l'une des revendications précédentes, **caractérisé en ce que** le dispositif de couplage (7) présente un dispositif de positionnement pour le positionnement du dispositif de couplage (7) sous un module de couplage (33) d'un véhicule automobile (5).

8. Dispositif d'alimentation en énergie (3) selon la revendication 4, **caractérisé en ce que** le dispositif de couplage (7) présente un dispositif de recouvrement (35) déplaçable pour le recouvrement et la libération du module de couplage (19).

9. Système d'alimentation en énergie (1) pour l'alimentation en énergie d'un véhicule automobile (5), avec un dispositif d'alimentation en énergie (3) selon l'une des revendications 1 à 8, et avec un véhicule automobile (5), dans lequel le véhicule automobile (5) présente au niveau d'un côté inférieur (31) un module de couplage (33) qui est aménagé pour la liaison active avec le dispositif de couplage (7) du dispositif d'alimentation en énergie (3).

10. Système d'alimentation en énergie (1) selon la revendication 9, **caractérisé par** un dispositif de communication pour la transmission d'informations et/ou de données entre le dispositif d'alimentation en énergie (3) et le véhicule automobile (5).

11. Procédé pour un dispositif d'alimentation en énergie (3) selon l'une des revendications 1 à 8 pour l'alimentation en énergie d'un véhicule automobile (5), dans lequel
- un dispositif de couplage (7) est déplacé librement sous un véhicule automobile (5), dans lequel
- le dispositif de couplage (7) est relié activement au véhicule automobile (5) pour l'alimentation en énergie du véhicule automobile (5) au niveau d'un côté inférieur (31) du véhicule automobile (5), et dans lequel
- de l'énergie est fournie au véhicule automobile (5) par le biais du dispositif de couplage (7).

12. Procédé selon la revendication 11, **caractérisé en ce que** le dispositif de couplage (7) est positionné sous un module de couplage (33) du véhicule automobile (5), dans lequel un module de couplage (19) du dispositif de couplage (7) est déplacé transversalement, de préférence perpendiculairement à un plan de déplacement du dispositif de couplage (7) afin d'établir la liaison active entre le module de couplage (19) du dispositif de couplage (7) et le module de couplage (33) du véhicule automobile (5).

13. Procédé selon l'une des revendications 11 et 12, **caractérisé en ce que** le dispositif de couplage (7) envoie des informations et/ou des données au véhicule automobile (5), les reçoit du véhicule automobile (5), et/ou les remplace par le véhicule automobile (5).

14. Procédé selon l'une des revendications 11 à 13, **caractérisé en ce que** la liaison active du dispositif de couplage (7) avec le véhicule automobile (5) est séparée après l'alimentation en énergie du véhicule automobile (5), dans lequel le dispositif de couplage (7) est déplacé de la zone sous le véhicule automobile (5).

15. Procédé selon l'une des revendications 11 à 14, **caractérisé en ce que** de l'énergie électrique est fournie au véhicule automobile (5) par le biais de la liaison active avec le dispositif de couplage (7).
